# EUROPÄISCHE PATENTSCHRIFT

(11) **EP 2 404 013 B1**
(45) Veröffentlichungstag und Bekanntmachung des Hinweises auf die Patenterteilung: **17.08.2016**
(21) Anmeldenummer: 10702662.7
(22) Anmeldetag: 01.02.2010
(51) Int. Cl.: E04F 15/02, E04F 15/04, E04F 15/10, E04F 15/20, B23B 39/16, B27C 3/04, E04F 15/18, E04B 5/02, E04B 9/00, E04B 9/04, G10K 11/172, E04B 1/82, E04B 1/84

(54) **FUSSBODENPANEEL SOWIE VERFAHREN UND VORRICHTUNG ZU DESSEN HERSTELLUNG**
FLOOR PANEL AND METHOD AND DEVICE FOR PRODUCING SAME
PANNEAU DE REVÊTEMENT DE SOL, PROCÉDÉ ET DISPOSITIF DE FABRICATION ASSOCIÉS

(30) Priorität: 04.02.2009 DE 202009001318 U; 14.09.2009 DE 102009041099
(43) Veröffentlichungstag der Anmeldung: 11.01.2012
(73) Patentinhaber: Fritz Egger GmbH & Co. OG, 6380 St. Johann in Tirol (AT); Eichhorn GmbH & Co. KG, 63607 Wächtersbach (DE)
(72) Erfinder: EICHHORN, Adrian, 63607 Wächtersbach (DE)
(74) Vertreter: Cohausz & Florack
(86) Internationale Anmeldenummer: PCT/EP2010/051169
(87) Internationale Veröffentlichungsnummer: WO 2010/089271

(56) Entgegenhaltungen:
- EP-A2- 1 321 593
- DE-A1- 19 505 025
- DE-A1- 19 839 973
- DE-A1- 19 857 419
- DE-A1-102007 002 484
- JP-A- 3 005 545
- US-A- 2 355 454
- US-A- 3 770 560
- US-A1- 2002 175 023

## Beschreibung

Die Erfindung betrifft ein Fußbodenpaneel mit schallabsorbierenden Eigenschaften, enthaltend eine eine Oberseite und eine Unterseite aufweisende Holzwerkstoffplatte als Trägerplatte, wobei das Fußbodenpaneel (1) mit einem Nutprofil (9a) und einem Federprofil (9b) versehen ist, wobei das Fußbodenpaneel eine Vielzahl von Ausnehmungen aufweist, die sich von seiner Oberseite ausgehend in Richtung seiner Unterseite erstrecken und die Trägerplatte vollständig durchdringen, wobei jede Ausnehmung unterteilt ist in mindestens einen oberen Abschnitt und in genau einen unteren Abschnitt, wobei sich bei jeder Ausnehmung jeder obere Abschnitt von der Oberseite des Fußbodenpaneels bis zum unteren Abschnitt und der untere Abschnitt von jedem oberen Abschnitt bis zur Unterseite der Trägerplatte erstreckt, wobei bei jeder Ausnehmung die Querschnittsfläche jedes oberen Abschnitts kleiner als die Querschnittsfläche des unteren Abschnitts ist. Ein solches Fußbodenpaneel ist aus der EP 1 321 593 A2 bekannt.

Ferner betrifft die Erfindung ein Verfahren zur Herstellung eines Akustikpaneels mit schallabsorbierenden Eigenschaften, bei dem nacheinander die folgenden Schritte durchgeführt werden: Bereitstellen einer Platte mit einer eine Auftrittsfläche bildenden Oberseite und einer eine Auflagefläche bildenden Unterseite, Erzeugen von Löchern mit einer ersten Querschnittsfläche in der Oberseite oder in der Unterseite, Verlagern der Platte und Erzeugen von Löchern mit einer zweiten Querschnittsfläche, in der jeweils anderen Seite, wobei zumindest ein Teil der Löcher mit der ersten Querschnittsfläche in die Löcher mit der zweiten Querschnittsfläche mündet, wobei jedes der Löcher mit der ersten Querschnittsfläche, das in die Löcher mit der zweiten Querschnittsfläche mündet, bis in den Holzwerkstoff reicht. Ferner betrifft die Erfindung eine entsprechende Vorrichtung zur Durchführung eines Verfahrens zur Herstellung eines Akustikpaneels mit schallabsorbierenden Eigenschaften. Ein solches Verfahren und eine solche Vorrichtung ist aus der US 2002/175023 A1 bekannt.

Fußbodenpaneele im Sinne der Erfindung sind einlagige oder mehrlagige Platten, beispielsweise hergestellt unter Verwendung einer Holzplatte, einer Holzwerkstoffplatte, einer WPC-Platte (WPC: Wood Plastic Composite, Holz-KunststoffVerbund), einer Compactplatte (Schichtstoffplatte aus mehreren, imprägnierten und verpressten Zellulosefaserbahnen) oder Kombinationen davon. Ein solches Fußbodenpaneel kann eine Beschichtung aufweisen, beispielsweise umfassend Echtholz, Laminat (DPL: Direct Pressure Laminate, direkt verpresstes Laminat, CPL: Continuous Pressure Laminate, kontinuierlich verpresstes Laminat, HPL: High Pressure Laminate, Hochdrucklaminat), Lack, beispielsweise aufgetragen durch Direktdruck, eine Kunststoff- oder Plexiglasplatte, eine Metallplatte oder Kombinationen davon.

Fußbodenpaneele dieser Art sind mit Nut- und Federprofilen versehen, mit denen die Paneele bei der Verlegung eines Fußbodens untereinander verankert werden.

Verlegt werden Fußbodenpaneele der zuvor beschriebenen Art auch in Räumen, in denen durch bauliche Maßnahmen zur Verbesserung der Raumakustik optimale und auf die Nutzung abgestimmte Hörbedingungen geschaffen werden sollen. Im Wesentlichen dienen diese Maßnahmen der Lärmminderung sowie der Verbesserung der Sprachverständlichkeit in den jeweiligen Räumen. Erforderlich hierfür sind eine Verringerung des Schalldruckpegels und eine Verkürzung der Nachhallzeit.

Die Wände und/oder Decken werden in den genannten Räumen üblicherweise mit Schallabsorbern in Form von schallabsorbierenden Decken- bzw. Wandverkleidungselementen verkleidet. Solche schallabsorbierenden Verkleidungselemente weisen in einer einfachen Ausführungsform auf einer Seite eine Vielzahl von Löchern oder Schlitzen eines Querschnitts auf, der üblicherweise wenige Quadratmillimeter beträgt. Durch diese Öffnungen dringt der Schall in das Innere des Schallabsorbers ein, welches Innere von mit den Löchern oder Schlitzen verbundenen relativ großen Hohlräumen gebildet werden kann. Die Hohlräume können zu der Seite, die von den Löchern oder Schlitzen abgewandt ist, mit einem Akustikvlies verschlossen sein, welches eine zusätzlich schallabsorbierende Wirkung hat.

Zur Minimierung von Geräuschen im Fußbodenbereich wird der Fußbodenbelag in den genannten Räumen häufig mit einer sogenannten Trittschalldämmung versehen, also einer porösen Abschlussschicht auf der Fußbodenunterseite. Diese Abschlussschicht soll verhindern, dass beim Betreten des Fußbodens durch sich relativ zueinander bewegende Teile des Fußbodenaufbaus Reibungsgeräusche entstehen. Auch werden die Geräusche, die entstehen, wenn das Schuhwerk von in dem Raum befindlichen Personen auf die Fußbodenoberfläche (Auftrittsfläche) trifft, etwas durch die Trittschalldämmung gedämpft.

Es ist die Aufgabe der vorliegenden Erfindung, ein Fußbodenpaneel bereitzustellen, das verbesserte schallabsorbierende Eigenschaften hat. Ferner soll ein entsprechendes Herstellungsverfahren und eine entsprechende Herstellungsvorrichtung angegeben werden.

Die zuvor hergeleitete und aufgezeigte Aufgabe wird bei einem Fußbodenpaneel der eingangs genannten Art dadurch gelöst,
- dass die maximale Breite jedes oberen Abschnitts aller Ausnehmungen höchstens 1,2 mm beträgt und
- dass bei jeder Ausnehmung sich jeder obere Abschnitt von der Oberseite des Fußbodenpaneels bis in die Trägerplatte erstreckt.

Erfindungsgemäß ist erkannt worden, dass die akustischen Eigenschaften, insbesondere die schallabsorbierenden Eigenschaften, in Räumen weiter dadurch verbessert werden können, dass auch der Fußboden mit einer Vielzahl von Ausnehmungen versehen wird, die sich von seiner Oberseite, wo sie einen relativ kleinen Querschnitt haben, in Richtung seiner Unterseite erstrecken, wobei die Ausnehmungen sich von der Oberseite zur Unterseite vergrößern. Mit anderen Worten ist erfindungsgemäß möglich, einen Fußboden zu schaffen, der oberseitig mit kleinen Öffnungen versehen ist, die in damit verbundene relativ große Hohlräume münden. Ein weiterer Vorteil ist, dass erfindungsgemäß Fußbodenpaneele angegeben werden, also relativ handliche Platten, mit denen auf einfache Weise auch von technischen Laien ein Fußboden mit schallabsorbierenden Eigenschaften hergestellt werden kann.

Wie bereits eingangs angedeutet, kann ein Fußbodenpaneel, so auch das erfindungsgemäße Fußbodenpaneel, einlagig oder mehrlagig aufgebaut sein. Das Fußbodenpaneel kann also lediglich eine Trägerplatte umfassen, darüber hinaus aber auch aus einem Verbund aus einer Trägerplatte und einer wie auch immer gearteten Beschichtung bestehen. Die Trägerplatte ist eine Holzwerkstoffplatte, insbesondere Faserplatte, vorzugsweise HDF-Platte (HDF: hochdichte Faserplatte) oder MDF-Platte (MDF: mitteldichte Faserplatte), Spanplatte oder OSB-Platte (OSB: Oriented Strand Board, Platte mit orientierten Strands). Sofern die Trägerplatte eine Beschichtung aufweist, kann die Beschichtung Echtholz, Laminat (DPL, CPL, HPL), Lack (Direktdruck), eine Kunststoff- oder Plexiglasplatte, eine Metallplattem, eine Glasplatte oder Kombinationen davon umfassen. Das erfindumgogemäße Fußbodenpaneel ist mit einem Nutprofil und einem Federprofil versehen.

Gemäß einer Ausgestaltung des erfindungsgemäßen Fußbodenpaneels ist vorgesehen, dass bei jeder Ausnehmung die Querschnittsform jedes oberen Abschnitts und/oder das den jeweiligen oberen Abschnitt bildende Material des Fußbodenpaneels derart gebildet ist, dass eine Flüssigkeit mit einer Oberflächenspannung von mindestens 50x10⁻³N/m, bevorzugt von mindestens 40x10⁻³N/m, besonders bevorzugt von mindestens 30x10⁻³N/m, bei einer Temperatur von 20°C, nicht in den oberen Abschnitt eindringen kann. Auf diese Weise wird gewährleistet, dass Flüssigkeiten, die üblicherweise in Räumen mit besonderen akustischen Eigenschaften wie einem Konzertsaal, einem Tonstudio, einem Besprechungsraum etc., mit dem Boden in Kontakt kommen können, das Fußbodenpaneel nicht beschädigen können. Unter die zuvor genannten Flüssigkeiten fällt insbesondere Wasser (oder wasserbasierte Flüssigkeiten), welches mit dem Fußbodenpaneel in Kontakt kommen kann, wenn beispielsweise der Fußboden gereinigt wird, wenn regenbedingte Feuchtigkeit mit dem Schuhwerk in den Raum und auf den Fußboden gelangt oder wenn Getränke verschüttet werden. Die Oberflächenspannung von Wasser bei einer Temperatur von 20°C beträgt beispielsweise etwa 72x10⁻³N/m. Übliche Erfrischungsgetränke liegen mit ihrer Oberflächenspannung ebenfalls etwa in diesem Bereich. Die Oberflächenspannung bei 20°C liegt, um noch weitere Flüssigkeiten zu nennen, die nicht in die Ausnehmungen eindringen können, bei Öl im Bereich von 30 bis 40x10⁻³N/m oder bei Ethylenglykol bei etwa 48x10⁻³N/m.

Gemäß einer weiteren Ausgestaltung des erfindungsgemäßen Fußbodenpaneels ist vorgesehen, dass das Fußbodenpaneel eine Vielzahl von Sacklöchern aufweist, die sich von seiner Oberseite ausgehend in Richtung seiner Unterseite erstrecken. Unter einem Sackloch wird im Sinne der Erfindung eine Ausnehmung, beispielsweise Bohrung, verstanden, die das Werkstück nicht vollständig durchdringt, also eine bestimmte Tiefe hat. Das Vorsehen solcher Sacklöcher kann die Herstellung eines Fußbodenpaneels mit schallabsorbierenden Eigenschaften vereinfachen, da die gesamte Oberfläche des Fußbodenpaneels gleichmäßig mit Löchern versehen werden kann, ohne dass alle Löcher zwingend in die unterseitig vorgesehenen großen Hohlräume, also die unteren Abschnitte der Ausnehmungen, münden müssen. Auch kann das Vorsehen von Sacklöchern zu einer besonders ansprechenden Optik führen, wenn beispielsweise die gesamte Oberfläche gleichmäßig mit Öffnungen versehen ist oder, was auch möglich ist, mit bestimmten Mustern oder Motiven. Vorzugsweise ist auch das Sackloch so wie der obere Abschnitt der Ausnehmungen ausgebildet. Mit anderen Worten kann auch vorgesehen sein, dass bei jedem Sackloch die Querschnittsform und/oder das das Sackloch bildende Material des Fußbodenpaneels derart gebildet ist, dass eine Flüssigkeit mit einer Oberflächenspannung von mindestens 50x10⁻³N/m, bevorzugt von mindestens 40x10⁻³N/m, besonders bevorzugt von mindestens 30x10⁻³N/m, bei einer Temperatur von 20°C, nicht in den oberen Abschnitt eindringen kann.

Die Ausnehmungen, insbesondere die oberen Abschnitte davon, und/oder die Sacklöcher können innen, das heißt an ihrer Innenwandung, auch gefärbt oder versiegelt sein. Auch ist es denkbar, die Ausnehmungen, insbesondere die oberen Abschnitte davon, und/oder die Sacklöcher mit einer schalloffenen (schalldurchlässigen) Masse zu verschließen, die das Innere des Fußbodenpaneels noch besser vor Schmutz und Feuchtigkeit schützt. In die Ausnehmungen, insbesondere die oberen Abschnitte davon, und/oder in die Sacklöcher kann auch ein Imprägniermittel eingebracht werden, um die Feuchteaufnahme weiter zu reduzieren und/oder um das Eindringen von Feuchte zu verringern. Als Imprägniermittel kann beispielsweise ein hydrophob wirksames Mittel verwendet werden, etwa eine Wachsemulsion.

Gemäß wiederum einer weiteren Ausgestaltung des erfindungsgemäßen Fußbodenpaneels ist vorgesehen, dass der Querschnitt zumindest eines oberen Abschnitts und/oder des unteren Abschnitts zumindest einer Ausnehmung, bevorzugt aller Ausnehmungen, und/oder der Querschnitt zumindest eines Sacklochs, bevorzugt aller Sacklöcher, eine Kreisform, eine elliptische Form, eine mehreckige, insbesondere drei- oder viereckige, Form oder eine Freiform hat. Grundsätzlich ist also jede Form denkbar, wobei die Kreisform oder die elliptische Form auf besonders einfache Weise durch Bohren hergestellt werden kann. Andere Formen wie beispielsweise die mehreckige Form, insbesondere die dreieckige oder viereckige Form, oder die Freiform kann auf einfache Weise durch Stanzen oder mittels Laser hergestellt werden.

Erfindungsgemäß ist vorgesehen, dass die maximale Breite jedes oberen Abschnitts aller Ausnehmungen höchstens 1,2 mm beträgt. Außerdem ist vorgesehen, dass die maximale Breite, insbesondere der Durchmesser, jedes oberen Abschnitts aller Ausnehmungen und/oder die maximale Breite, insbesondere der Durchmesser, aller Sacklöcher höchstens 1,2 mm, bevorzugt höchstens 0,8 mm, besonders bevorzugt höchstens 0,6 mm, beträgt. Zusätzlich kann bei dem erfindungsgemäßen Fußbodenpaneel vorgesehen sein, dass die Querschnittsfläche jedes oberen Abschnitts aller Ausnehmungen und/oder die Querschnittsfläche aller Sacklöcher höchstens 1,15 mm², bevorzugt höchstens 0,55 mm², besonders bevorzugt höchstens 0,30 mm², beträgt. Auf diese Weise sind die Feuchtigkeit oder Schmutz ausgesetzten Löcher besonders gut geschützt.

Gemäß wiederum einer weiteren Ausgestaltung des erfindungsgemäßen Fußbodenpaneels ist vorgesehen, dass die Querschnittsfläche des unteren Abschnitts zumindest einer Ausnehmung, bevorzugt aller Ausnehmungen, mindestens 10-fach, bevorzugt mindestens 40-fach, besonders bevorzugt mindestens 100-fach, größer als die Querschnittsfläche zumindest eines oberen Abschnitts der jeweiligen Ausnehmung ist. Ein solches Verhältnis von kleiner Querschnittsfläche zu großer Querschnittsfläche führt bei den Ausnehmungen zu einer besonders guten Schallabsorption.

Gemäß einer weiteren Ausgestaltung ist vorgesehen, dass der Anteil an Löchern, die an der Oberseite des Fußbodenpaneels von den oberen Abschnitten der Ausnehmungen und/oder von den Sacklöchern gebildet werden, zu der gesamten oberseitigen Oberfläche des Fußbodenpaneels höchstens 18%, bevorzugt höchstens 8%, besonders bevorzugt höchstens 3%, beträgt. Ein solcher Anteil an Löchern relativ zu der gesamten Oberfläche führt zu einer besonders guten Stabilität des Fußbodenpaneels, was besonders wichtig ist, da das Fußbodenpaneel im Vergleich zu einer Decken- oder Wandverkleidung mit relativ hohen Kräften belastet wird. Im Übrigen wird dadurch erreicht, dass die Löcher, also die oberen Abschnitte der Ausnehmungen und die Sacklöcher, aus der üblichen Blickhöhe von stehenden oder sitzenden Personen kaum wahrgenommen werden können.

Letzteres, das heißt die reduzierte Wahrnehmbarkeit der Löcher, wird weiter dadurch begünstigt, dass der Abstand jedes Lochs zu dem jeweils am nächsten liegenden benachbarten Loch höchstens 10 mm, bevorzugt höchstens 5 mm, besonders bevorzugt höchstens 3 mm, beträgt.

Gemäß noch einer weiteren Ausgestaltung des erfindungsgemäßen Fußbodenpaneels ist vorgesehen, dass das Raster der Löcher, die an der Oberseite des Fußbodenpaneels von den oberen Abschnitten der Ausnehmungen und/oder von den Sacklöchern gebildet werden, auf das Raster der unteren Abschnitte der Ausnehmungen, also der unterseitig in die Trägerplatte eingebrachten Löcher, abgestimmt ist. Mit anderen Worten ist der Rasterabstand der unteren Abschnitte vorzugsweise ein ganzzahliges Vielfaches des Rasterabstands der oberseitigen Löcher. Beispielsweise beträgt der Rasterabstand der unterseitigen Löcher 16 mm und der Rasterabstand der oberseitigen Löcher, das heißt der oberen Abschnitte der Ausnehmungen und der Sacklöcher, 4 mm. Auf diese Weise ist ein Fußbodenpaneel auf besonders einfache Weise mit besonders guten schallabsorbierenden Eigenschaften herstellbar.

Gemäß noch einer weiteren Ausgestaltung ist vorgesehen, dass bei mindestens einer Ausnehmung, bevorzugt bei allen Ausnehmungen, mindestens zwei, bevorzugt mindestens drei, besonders bevorzugt mindestens vier, obere Abschnitte in einen gemeinsamen unteren Abschnitt münden. Auf diese Weise werden die akustischen Eigenschaften, das heißt die Schallabsorptionsfähigkeit, weiter verbessert.

Gemäß wiederum einer weiteren Ausgestaltung des erfindungsgemäßen Fußbodenpaneels ist eine Abschlussschicht vorgesehen, die mit der Unterseite der Trägerplatte verbunden ist. Dabei kann die Abschlussschicht von einem Akustikvlies und/oder einem porösen Material gebildet werden. Vorzugsweise ist ein Akustikvlies direkt benachbart zur Unterseite der Trägerplatte angeordnet und ein poröses Material benachbart zum Akustikvlies; das Akustikvlies liegt also bevorzugt zwischen der Trägerplatte und dem porösen Material. Eine solche Abschlussschicht verbessert die Schallabsorption von in die Löcher eindringendem Schall und bildet, insbesondere bei zusätzlicher Verwendung des porösen Materials, eine geeignete Trittschalldämmung. Bei dem porösen Material handelt es sich insbesondere um Kunststoff, Karton, Polystyrol, oder dergleichen.

Erfindungsgemäß ist vorgesehen, dass bei jeder Ausnehmung sich jeder obere Abschnitt von der Oberseite des Fußbodenpaneels bis in die Trägerplatte erstreckt.

Gemäß einer weiteren Ausgestaltung ist wie erwähnt eine Beschichtung vorgesehen, die mit der Oberseite und/oder der Unterseite der Trägerplatte verbunden ist und die die Ausnehmungen vollständig durchdringen. Dabei kann sich bei jeder Ausnehmung jeder obere Abschnitt und/oder jedes Sackloch von der Oberseite der Beschichtung bis in die Trägerplatte erstrecken. Mit anderen Worten kann auch die Beschichtung Bestandteil des Materials sein, welches die Ausnehmungen, insbesondere den oberen Abschnitt der Ausnehmungen, bzw. die Sacklöcher bildet.

Die Aufgabe wird ferner gelöst durch ein Verfahren zur Herstellung eines Fußbodenpaneels mit schallabsorbierenden Eigenschaften wie es zuvor definiert wurde, bei dem nacheinander die folgenden Schritte durchgeführt werden:
- Bereitstellen einer Platte als Holzwerkstoffplatte oder enthaltend eine Holzwerkstoffplatte, wobei die Platte mit einer eine Auftrittsfläche bildenden Oberseite und einer eine Auflagefläche bildenden Unterseite versehen ist,
- Erzeugen von Löchern mit einer ersten Querschnittsfläche in der Oberseite oder in der Unterseite,
- Verlagern der Platte und
- Erzeugen von Löchern mit einer zweiten Querschnittsfläche, die von der ersten Querschnittsfläche verschieden ist, in der jeweils anderen Seite,
wobei zumindest ein Teil der Löcher mit der kleineren Querschnittsfläche in die Löcher mit der größeren Querschnittsfläche mündet, wobei jedes der Löcher mit der kleineren Querschnittsfläche, das in die Löcher mit der größeren Querschnittsfläche mündet, bis in den Holzwerkstoff reicht und eine maximale Breite von höchstens 1,2 mm hat.

Durch das erfindungsgemäße Verfahren kann auf besonders einfache Weise, beispielsweise unter Verwendung herkömmlicher Fußbodenpaneele, ein Fußbodenpaneel mit schallabsorbierenden Eigenschaften hergestellt werden. Die genannten Löcher mit der ersten Querschnittsfläche und/oder mit der zweiten Querschnittsfläche werden vorzugsweise durch eine spanende Bearbeitung, beispielsweise durch Bohren, erzeugt. Es ist aber auch möglich, einige oder alle Löcher durch Stanzen oder mit Hilfe eines Lasers (Einbrennen) herzustellen.

Grundsätzlich kann das erfindungsgemäße Verfahren auf verschiedene Weise durchgeführt werden. Zum einen ist es möglich, in ein und derselben Vorrichtung die Platte einmal mit den Löchern des ersten Querschnitts und anschließend, nachdem die Platte gewendet worden ist, mit Löchern des zweiten Querschnitts auf der gegenüberliegenden Seite zu versehen. Es ist aber auch denkbar, nach dem Erzeugen der Löcher des ersten Querschnitts in einer ersten Einrichtung die Platte einer zweiten Einrichtung zuzuführen, die dann die Bohrungen des zweiten Querschnitts auf der gegenüberliegenden Seite vornimmt. Ein konkretes Beispiel für letzteres Verfahren wird später noch anhand einer erfindungsgemäßen Vorrichtung zur Durchführung eines Verfahrens zur Herstellung eines Fußbodenpaneels mit schallabsorbierenden Eigenschaften erläutert.

Gemäß einer Ausgestaltung des erfindungsgemäßen Verfahrens ist vorgesehen, dass zum Erzeugen der Löcher mit der ersten Querschnittsfläche ein erster Bohrvorgang durchgeführt wird, umfassend mindestens einen ersten Bohrhub, bei dem ein Bohrerfeld mit einer Vielzahl von Bohrern relativ zu der, vorzugsweise auf einem Tisch aufliegenden, Platte bewegt wird, während zumindest ein Teil der Bohrer eines ersten Durchmessers rotiert, wobei das Bohrerfeld so weit in Richtung der Platte bewegt wird, dass die rotierenden Bohrer des ersten Durchmessers die Platte zumindest teilweise durchdringen und Löcher eines ersten Durchmessers erzeugen. Bevorzugt ist der Tisch bzw. die Platte dabei bezogen auf die vertikale Richtung stationär und das Bohrerfeld beweglich. Das Bohrerfeld kann also vertikal auf die Platte abgesenkt werden, wodurch in einem einzigen Bohrhub eine Vielzahl von Löchern erzeugt wird. Beispielsweise werden mit einem einzigen Bohrhub mehr als 100 Löcher, bevorzugt mehr als 200 Löcher, besonders bevorzugt mehr als 300 Löcher, in die Platte eingebracht.

Das zuvor für die Löcher mit der ersten Querschnittsfläche Gesagte kann auch für die Löcher mit der zweiten Querschnittsfläche gelten. Entsprechend kann also auch vorgesehen sein, dass zum Erzeugen der Löcher mit der zweiten Querschnittsfläche ein zweiter Bohrvorgang durchgeführt wird, umfassend mindestens einen zweiten Bohrhub, bei dem ein Bohrerfeld mit einer Vielzahl von Bohrern relativ zu der, vorzugsweise auf einem oder dem Tisch aufliegenden, Platte bewegt wird, während zumindest ein Teil der Bohrer eines zweiten Durchmessers rotiert, wobei das Bohrerfeld so weit in Richtung der Platte bewegt wird, dass die rotierenden Bohrer des zweiten Durchmessers die Platte zumindest teilweise durchdringen und Löcher eines zweiten Durchmessers erzeugen. Dabei kann das Bohrerfeld zur Erzeugung der Löcher des ersten Durchmessers identisch mit dem Bohrerfeld zur Erzeugung der Löcher des zweiten Durchmessers sein. Es können aber auch mehrere Bohrerfelder benachbart zueinander angeordnet sein, wobei dann die Platte zwischen den Bohrerfeldern mit Hilfe einer Transporteinrichtung bewegt werden kann.

Die genannten Löcher bilden bei dem fertigen Fußbodenpaneel entweder die oberen Abschnitte der Ausnehmungen und die ggf. vorhandenen Sacklöcher oder die unteren Abschnitte der Ausnehmungen.

Gemäß noch einer weiteren Ausgestaltung des erfindungsgemäßen Verfahrens ist vorgesehen, dass der erste Bohrvorgang und/oder der zweite Bohrvorgang jeweils mehrere Bohrhübe umfasst, bei denen die rotierenden Bohrer die Platte zumindest teilweise durchdringen, wobei zwischen zwei Bohrhüben des ersten Bohrvorgangs und/oder des zweiten Bohrvorgangs die, vorzugsweise auf dem Tisch aufliegende, Platte in einer ersten Richtung und/oder in einer zweiten Richtung parallel zum Bohrerfeld verschoben wird. Mit anderen Worten können mehrere erste Bohrhübe während des ersten Bohrvorgangs und/oder mehrere zweite Bohrhübe während des zweiten Bohrvorgangs durchgeführt werden, wobei zwischen den einzelnen ersten Bohrhüben und/oder zwischen den einzelnen zweiten Bohrhüben ein getakteter Vortrieb der Platte durchgeführt wird. Das zuvor für das Bohren Gesagte gilt gleichermaßen auch für den Fall des Stanzens der Löcher oder für den Fall der Verwendung eines Lasers, wobei im letzteren Fall der "Hub" bzw. "Bohrhub" definiert ist durch das Einschalten (Beginn des Hubs) und Ausschalten (Ende des Hubs) des Lasers.

Wie bereits bei der Beschreibung des erfindungsgemäßen Fußbodenpaneels angedeutet, kann bei dem Herstellungsverfahren gemäß einer Ausgestaltung vorgesehen sein, dass die kleinere Querschnittsfläche der Löcher so gewählt wird, dass bei dem jeweiligen Loch eine Flüssigkeit mit einer Oberflächenspannung von mindestens 50x10⁻³N/m, bevorzugt von mindestens 40x10⁻³N/m, besonders bevorzugt von mindestens 30x10⁻³N/m, bei einer Temperatur von 20°C, nicht in den oberen Abschnitt eindringen kann. So wird das Eindringen üblicherweise mit einem Fußboden in Kontakt kommender Flüssigkeiten sicher vermieden.

Gemäß noch einer weiteren Ausgestaltung des erfindungsgemäßen Verfahrens kann vorgesehen sein, dass ein Teil, bevorzugt die Hälfte, der Löcher mit der kleineren Querschnittsfläche Sacklöcher bildet. Mit anderen Worten kann, wie bereits beschrieben, ein Teil der Löcher so angeordnet sein, dass sie nicht in die unteren Abschnitte der Ausnehmungen, das heißt in die Löcher mit dem größeren Querschnitt, münden. Dies vereinfacht die Herstellung und führt zu einer verbesserten Optik des Fußbodenpaneels.

Gemäß noch einer weiteren Ausgestaltung des Verfahrens kann vorgesehen sein, dass der Querschnitt zumindest eines Lochs, bevorzugt aller Löcher, mit der kleineren Querschnittsfläche und/oder der größeren Querschnittsfläche so gewählt wird, dass er eine Kreisform, eine elliptische Form, eine mehreckige Form oder eine Freiform hat. Mehreckige Formen oder eine Freiform werden dabei vorzugsweise durch Stanzen oder durch einen Laser erzeugt. Runde oder elliptische Formen können durch Bohren, beispielsweise mit dem beschriebenen Bohrerfeld, erzeugt werden.

Wie zuvor erläutert ist erfindungsgemäß vorgesehen, dass die maximale Breite, insbesondere der Durchmesser, jedes Lochs mit der kleineren Querschnittsfläche so gewählt wird, dass die maximale Breite, insbesondere der Durchmesser, höchstens 1,2 mm, bevorzugt höchstens 0,8 mm, besonders bevorzugt höchstens 0,6 mm, beträgt. Zusätzlich kann vorgesehen sein, dass die Querschnittsfläche jedes Lochs mit der kleineren Querschnittsfläche so gewählt wird, dass sie höchstens 1,15 mm², bevorzugt höchstens 0,55 mm², besonders bevorzugt höchstens 0,30 mm² , beträgt. Solche Löcher verhindern sicher das Eindringen von Feuchtigkeit und Schmutz in das Innere eines fertigen Fußbodenpaneels.

Gemäß einer weiteren Ausgestaltung kann vorgesehen sein, dass eine Abschlussschicht vorgesehen ist, die mit der Unterseite der Platte verbunden wird. Dabei kann die Abschlussschicht wie gesagt von einem Akustikvlies und/oder einem porösem Material gebildet werden, wobei, wenn beides vorhanden ist, das Akustikvlies vorzugsweise zwischen der Platte und dem porösem Material angeordnet wird.

Gemäß noch einer weiteren Ausgestaltung ist vorgesehen, dass die Platte, die auch als Laminat bereitgestellt werden kann, mit einer die Auftrittsfläche bildenden Beschichtung auf ihrer Oberseite und/oder einer Beschichtung auf ihrer Unterseite bereitgestellt wird. Eine Beschichtung schützt die Platte optimal und erhöht die Stabilität, wenn diese später als Teil eines Fußbodens eingesetzt und belastet bzw. Feuchtigkeit und Schmutz ausgesetzt wird.

Um eine besonders schnelle Herstellung der Löcher zu erreichen, kann gemäß einer weiteren Ausgestaltung vorgesehen sein, dass die Platte als Halbformat bereitgestellt wird, wobei die Platte erst nach dem Erzeugen der Löcher in mehrere Paneele aufgetrennt wird und wobei die Paneele dann mit Nut-und Federprofilen versehen werden. Es ist aber auch gemäß einer weiteren Ausgestaltung des Verfahrens denkbar, dass die Platte bereits als mit Nut- und Federprofilen versehenes Paneel bereitgestellt wird. Dies hat den Vorteil, dass die Löcher im Kantenbereich nicht bei einer nachträglichen Profilerzeugung für das Nut- und Federprofil beschädigt werden können.

Beim Erzeugen der Löcher kann bei dem erfindungsgemäßen Verfahren die Platte von Haltern gehalten werden, die insbesondere in das Nutprofil und/oder das Federprofil eingreifen. Auf diese Weise können die Bohrungen auch noch relativ nah am Kantenbereich eingebracht werden, ohne dass die Halter dies verhindern.

Darüber hinaus wird die Aufgabe auch gelöst durch eine Vorrichtung zur Durchführung eines Verfahrens zur Herstellung eines Fußbodenpaneels mit schallabsorbierenden Eigenschaften, insbesondere zur Durchführung eines wie zuvor definierten Verfahrens,
- mit einer ersten Einrichtung zur Erzeugung von Löchern mit einer ersten Querschnittsfläche in einer Platte, die eine Holzwerkstoffplatte aufweist oder ist, und
- mit einer zweiten Einrichtung zur Erzeugung von Löchern mit einer zweiten Querschnittsfläche, die von der ersten Querschnittsfläche verschieden ist, in einer Platte, die eine Holzwerkstoffplatte aufweist oder ist,
wobei die Einrichtungen so ausgebildet sind, dass bei den erzeugten Löchern zumindest ein Teil der Löcher der kleineren Querschnittsfläche in die Löcher der größeren Querschnittsfläche mündet, wobei jedes der Löcher mit der kleineren Querschnittsfläche, das in die Löcher mit der größeren Querschnittsfläche mündet, bis in den Holzwerkstoff reicht und eine maximale Breite von höchstens 1,2 mm hat.

Es sei angemerkt, dass die erste Einrichtung und die zweite Einrichtung durchaus auch in einem gemeinsamen Gehäuse und vorzugsweise in einem gemeinsamen Bohrerfeld integriert sein können. Dabei können im Falle eines Bohrerfeldes bereits vor dem ersten Bohrvorgang Bohrer eines relativ kleinen und Bohrer eines relativ großen Durchmessers vorgesehen sein, wobei dann jeweils nur die Bohrer aktiviert werden, die für die Erzeugung der jeweiligen Löcher notwendig sind, wohingegen die anderen Bohrer deaktiviert, also gegenüber den aktivierten Bohrern beispielsweise zurückgesetzt, sind. Es wäre auch denkbar, durch Austausch der Bohrer die erste Einrichtung in die zweite Einrichtung umzuwandeln.

Grundsätzlich ist es auch denkbar, wie bereits im Zusammenhang mit dem vorangehend beschriebenen Verfahren angedeutet, dass die Platte zunächst in der ersten Einrichtung durch Erzeugen von Löchern bearbeitet wird, dann in die zweite Einrichtung zur Erzeugung von Löchern verlagert bzw. übergeben wird und dort die weitere Bearbeitung durch Erzeugung von Löchern eines anderen Querschnitts durchgeführt wird. Eine solche Vorrichtung kann beispielsweise als Bohrzentrum ausgebildet sein, welches den Aufbau einer Doppel-Revolver-Trommel hat. Dabei sind zwei Revolver-Trommeln (Drehsterne) vorgesehen, die jeweils um eine zentrale Achse rotierend angeordnet sind, wobei die zu bearbeitende Platte zunächst in die erste Trommel bzw. den ersten Drehstern eingeführt wird und dort, getaktet oder kontinuierlich, verschiedene Bearbeitungspositionen durchläuft, wobei in jeder Bearbeitungsposition beispielsweise Löcher der einen Querschnittsfläche eingebracht werden. Anschließend wird die Platte an den zweiten Revolver bzw. Drehstern übergeben, beispielsweise mittels einer Übergabevorrichtung, die einen Greif- und/oder Transportmechanismus aufweisen kann. Daraufhin können dann auch hier einzelne Positionen durchlaufen werden, in denen dann beispielsweise Löcher einer anderen Querschnittsfläche auf der anderen Seite der Platte eingebracht werden. Nach kontinuierlichem oder getaktetem Durchlauf der Positionen wird die fertig gebohrte Platte am Ende ausgeworfen oder entnommen. Die Trommeln bzw. Drehsterne eines solchen Bohrzentrums können dabei während des Betriebs gegenläufig rotieren, die eine beispielsweise im und die andere gegen den Uhrzeigersinn. Dabei können für das Einbringen der Löcher der größeren Querschnittsfläche weniger Einzelpositionen, das heißt Bearbeitungspunkte bzw. -stationen, in der jeweiligen Trommel als im Falle der Einbringung von Löchern der kleineren Querschnittsfläche vorgesehen sein. Die einzelnen Revolver bzw. Drehsterne können dabei einen inneren Teil aufweisen, der rotiert, sowie einen starren äußeren Teil, der umlaufend um den rotierenden Teil angeordnet ist. Grundsätzlich wäre es auch denkbar, einen starren Teil im Innern und entsprechend einen außenliegenden rotierenden Teil vorzusehen. Der starre Teil trägt dabei vorzugsweise die einzelnen Bearbeitungsstationen, die die jeweilige Einrichtung zur Erzeugung von Löchern bilden, wohingegen der rotierende Teil zum Transport der Platte zwischen den einzelnem Stationen verwendbar ist.

Gemäß eimer anderen Ausgestaltung der erfindungsgemäßen Vorrichtung ist vorgesehen, dass die erste Einrichtung und/oder die zweite Einrichtung in mehrere Stationen unterteilt ist. Auf diese Weise kann in jeder Station derselben. Einrichtung ein Teil der Löcher desselben Durchmessers erzeugt werden, wobei die Löcher der einen Station zu den Löchern der zweiten Station auch versetzt sein können. Letzteres kann dadurch erreicht werden, dass die Statiomen derselben Einrichtung denselben Aufbau haben, aber quer zur Produktionsrichtung horizontal zueinander versetzt sind.

Wie bereits erwähnt, kann eine Transporteinrichtung zwischen der erstem Einrichtung und der zweiten Einrichtung und/oder zwischem den Stationen der ersten Einrichtung und/oder der zweiten Einrichtung vorgesehen sein. Auf einer solchen Transport einrichtung, beispielsweise einem bewegbaren Tisch oder Förderband, kann die Platte dann auf einfache Weise transportiert werden.

Schließlich wird die Aufgabe gelöst durch die Verwendung eines Verfahrens wie es zuvor beschrieben wurde oder einer Vorrichtumg wie sie zuvor beschrieben wurde zur Herstellung eines Fußbodenpaneels mit schallabsorbierenden Eigenschaften.

Es gibt nun eine Vielzahl von Möglichkeiten, das erfindungsgemäße Fußbodenpaneel, das erfindungsgemäße Verfahren und die erfindungsgemäße Vorrichtung auszugestalten und weiterzubilden. Hierzu wird einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: eine detaillierte Schnittansicht eines erfindungsgemäßen Fußbodenpaneels,
- Fig. 2 bis 5: Schnittansichten verschiedener Ausführungsbeispiele eines Fußbodenpaneels,
- Fig. 6a) und b): Ausführungsbeispiele des erfindungsgemäßen Herstellungsverfahrens und
- Fig. 7: einen Ausschnitt einer erfindungsgemäßen Herstellungsvorrichtung.

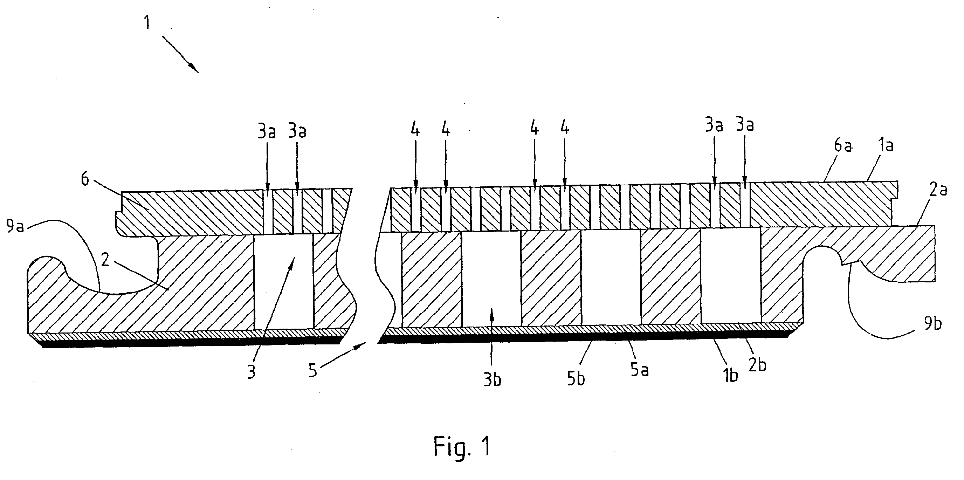

Fig. 1 zeigt ein Fußbodenpaneel 1 mit schallabsorbierenden Eigenschaften, enthaltend eine eine Oberseite 2a und eine Unterseite 2b aufweisende Trägerplatte 2, wobei das Fußbodenpaneel 1 eine Vielzahl von Ausnehmungen 3 aufweist, die sich von seiner Oberseite 1a ausgehend in Richtung seiner Unterseite 1b erstrecken und die Trägerplatte 2 vollständig durchdringen, wobei jede Ausnehmung 3 unterteilt ist in mindestens einen oberen Abschnitt 3a und in genau einen unteren Abschnitt 3b, wobei sich bei jeder Ausnehmung 3 jeder obere Abschnitt 3a von der Oberseite 1a des Fußbodenpaneels 1 bis zum unteren Abschnitt 3b und der untere Abschnitt 3b von jedem oberen Abschnitt 3a bis zur Unterseite 2b der Trägerplatte 2 erstreckt und wobei bei jeder Ausnehmung 3 die. Querschnittsfläche jedes oberen Abschnitts 3a kleiner als die Querschnittsfläche des unteren Abschnitts 3b ist.

Das Fußbodenpaneel 1 ist mit einem Nutprofil 9a und einem Federprofil 9b versehen und kann auf diese Weise mit mehreren gleichartigen Fußbodenpaneelen 1 zu einem Fußbodenbelag verbunden werden. Das Fußbodenpaneel 1 gemäß der vorliegenden Erfindung kann selbstverständlich auch mit Fußbodenpaneelen verbunden werden, die keine schallabsorbierenden Eigenschaften, insbesondere keine Löcher in der Ober- und Unterseite, aufweisen.

Bei dem dargestellten Fußbodenpaneel ist bei jeder Ausnehmung 3 die Querschnittsform jedes oberen Abschnitts 3a, hiervon sind hier zwei dargestellt, und das den oberen Abschnitt 3a jeweils umgebende Material derart gebildet, dass eine Flüssigkeit mit einer Oberflächenspannung von mindestens 50x10⁻³N/m nicht in den oberen Abschnitt eindringen kann. Dasselbe gilt für die ebenfalls vorgesehen Sacklöcher 4, die auf diese Weise ebenfalls ein Eindringen von beispielsweise Wasser verhindern.

Im dargestellten Beispiel sind die Löcher mit dem kleineren Querschnitt, das heißt die oberen Abschnitte 3a der Ausnehmungen 3 und die Sacklöcher 4, nur in der Beschichtung vorgesehen und dringen nicht in die darunter liegende Trägerplatte 2 ein. Die Beschichtung 6 ist hier gegenüber der Trägerplatte 2 relativ dick dargestellt, obwohl die Beschichtung auch nur wenige Bruchteile eines Millimeters dick sein kann, wohingegen die Trägerplatte mehrere Millimeter oder sogar Zentimeter dick sein kann.

An der Unterseite 2b ist als Teil einer Abschlussschicht 5 zumindest ein Akustikvlies 5a und darunter ein poröses Material 5b als Trittschalldämmung vorgesehen.

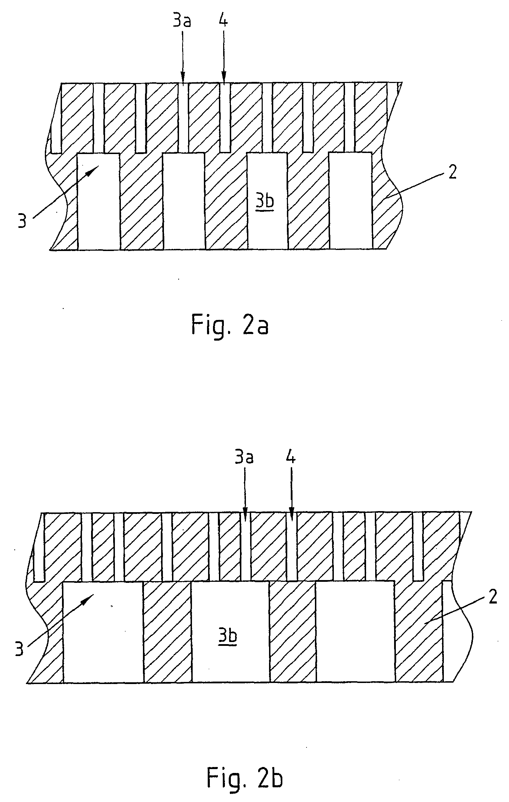

In den Figuren 2 bis 5 sind nun verschiedene Ausführungsbeispiele von Fußbodenpaneelen 1 dargestellt.

Fig. 2 zeigt zunächst den einfachsten Fall, bei dem nur eine Trägerplatte 2 ohne separate Beschichtung und ohne separate Abschlussschicht vorgesehen ist.

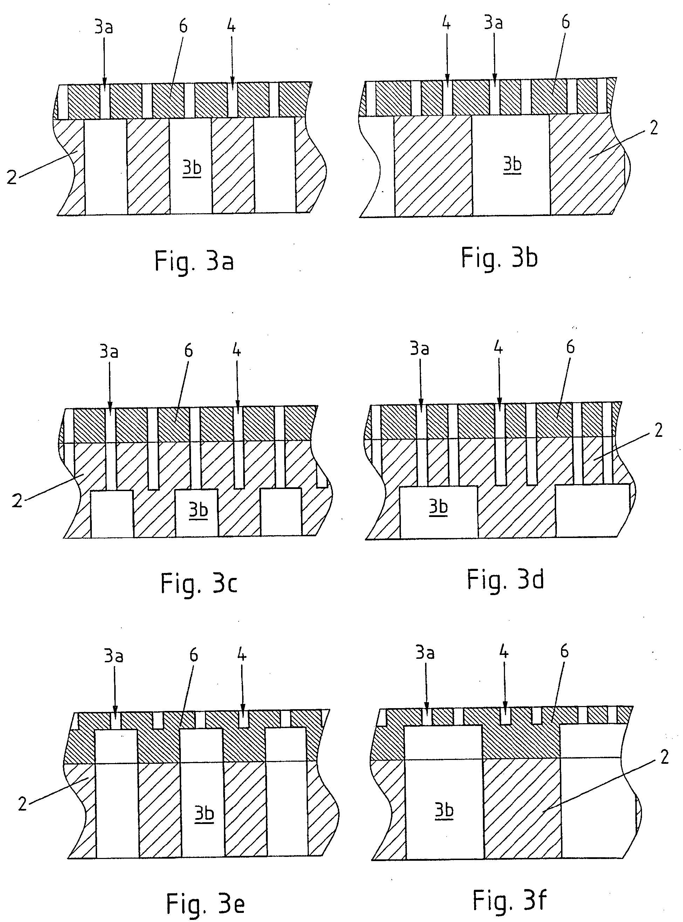

Die Figuren 3a) bis f) zeigen verschiedene Ausführungsbeispiele, bei denen das Fußbodenpaneel 1 eine Trägerplatte 2 sowie eine oberseitige Beschichtung 6 umfasst. Selbstverständlich kann im Sinne der Erfindung die Beschichtung auch zusätzlich oder alternativ an der Unterseite 2b der Trägerplatte 2 vorgesehen sein.

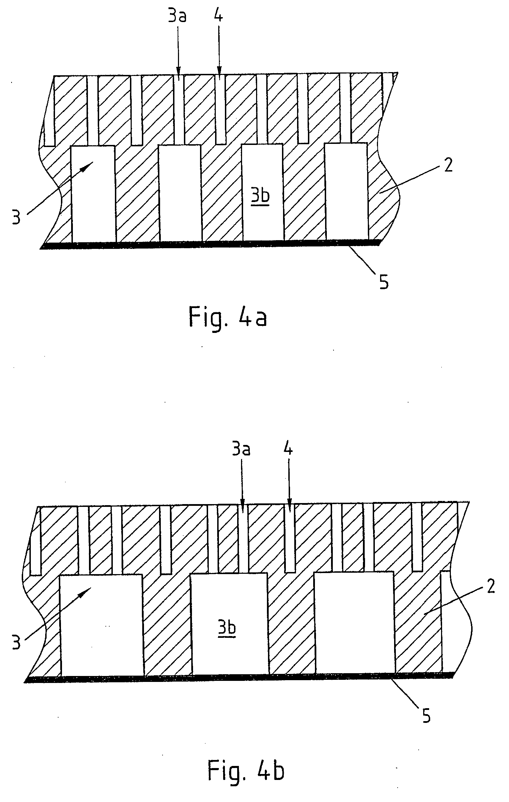

Die Figuren 4a) und b) zeigen Ausführungsbeispiele, bei denen das Fußbodenpaneel eine Trägerplatte 2 und eine Abschlussschicht 5 umfasst, wobei letztere wie in Fig. 1 dargestellt ausgebildet sein kann. Eine Beschichtung ist hier nicht vorgesehen.

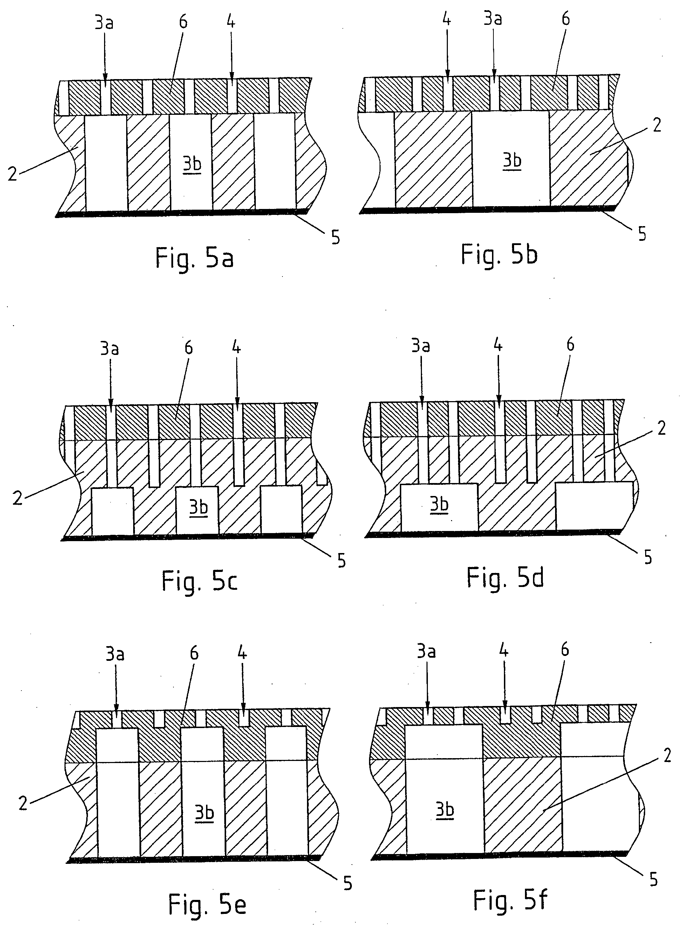

Die Figuren 5a) bis f) zeigen schließlich einige Ausführungsbeispiele eines Fußbodenpaneels 1 umfassend eine Trägerplatte 2 sowie eine oberseitige Beschichtung 6 und eine unterseitige Abschlussschicht 5. Die Fußbodenpaneele der Figuren 3e, 3f, 5e, 5f sind nicht erfindungsgemäß, da sich nicht bei jeder Ausnehmung jeder obere Abschnitt von der Oberseite des Fußbodenpaneels bis in die Trägerplatte erstreckt.

Bei allen dargestellten Ausführungsbeispielen sind zur besseren Veranschaulichung in den dargestellten Schnittansichten Sackbohrungen 4 dargestellt, obwohl auch Schnittansichten von Fußbodenpaneelen 1 denkbar sind, bei denen, obwohl Sacklöcher vorhanden sind, diese in den Schnittansichten nicht sichtbar wären. Der Vollständigkeit halber wird angemerkt, dass selbstverständlich auch Fußbodenpaneele 1 ohne Sacklöcher von der vorliegenden Erfindung umfasst sind.

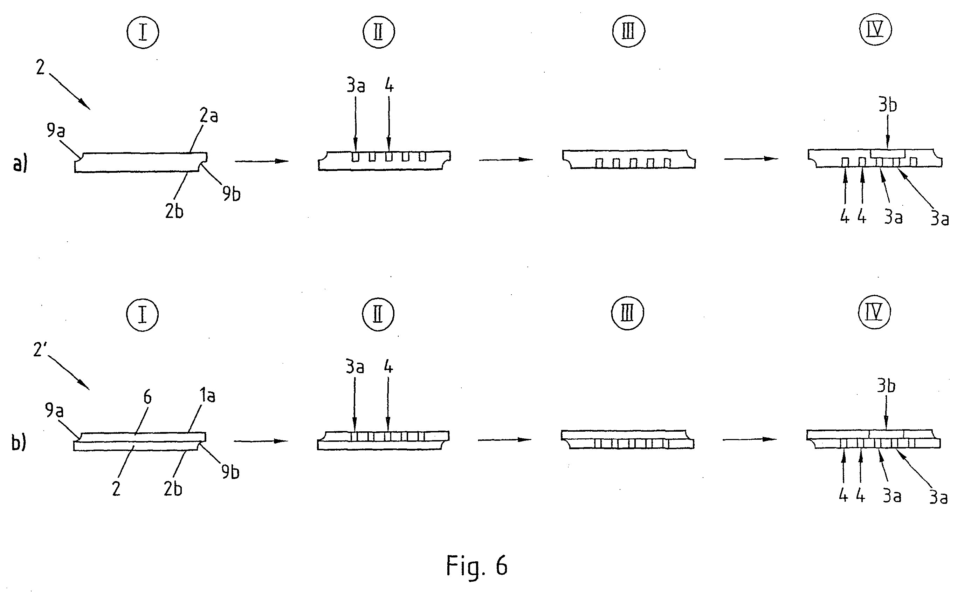

In den Figuren 6a) und b) ist ferner das erfindungsgemäße Verfahren beispielhaft veranschaulicht, wobei in Fig. 6a) eine einlagige Platte 2, die nur eine Trägerplatte 2 umfasst, und in Fig. 6b) eine zweilagige Platte 2' in Form eines Verbunds aus einer Trägerplatte 2 und einer oberseitigen Beschichtung 6 bearbeitet wird.

Die einzelnen Bearbeitungsschritte sind mit I, II, III und IV bezeichnet, wobei diese Bearbeitungsschritte nicht abschließend sind, sondern durch weitere Bearbeitungsschritte ergänzt werden können.

Im Bearbeitungsschritt I wird eine einlagige bzw. zweilagige Platte 2 bzw. 2' mit einer eine Auftrittsfläche bildenden Oberseite 1a bzw. 2a und einer eine Auflagefläche bildenden Unterseite 2b bereitgestellt. Mit Auftrittsfläche ist die Fläche gemeint, auf der später bei dem fertigen Fußboden die Personen auftreten. Mit Auflagefläche ist die Fläche gemeint, mit der das fertige Fußbodenpaneel 1 auf den Untergrund aufgelegt wird.

In Bearbeitungsschritt II werden Löcher 3a und 4 mit einer ersten Querschnittsfläche in der Oberseite 1a bzw. 2a der Platte 2 bzw. 2' erzeugt. Die Löcher 3a und 4 haben denselben Durchmesser und dieselbe Tiefe und werden mit demselben Bohrerfeld hergestellt.

In Bearbeitungsschritt III wird die Platte gewendet, was maschinell, insbesondere automatisch, oder von Hand durchgeführt werden kann.

In Bearbeitungsschritt IV werden schließlich Löcher 3b einer zweiten Querschnittsfläche, die von der ersten Querschnittsfläche verschieden ist, erzeugt.

Die Löcher sind so ausgebildet, dass zumindest ein Teil 3a der Löcher 3a und 4, die in diesem Ausführungsbeispiel die kleinere Querschnittsfläche haben, in die Löcher 3b, die in diesem Ausführungsbeispiel die größere Querschnittsfläche haben, mündet.

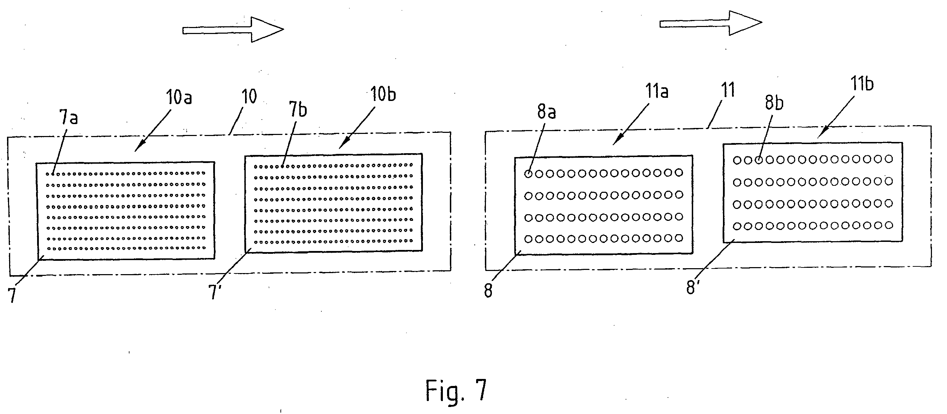

Fig. 7 zeigt schließlich einen Teil einer Vorrichtung zur Durchführung des in Fig. 6 schematisch dargestellten Verfahrens.

Die Vorrichtung weist eine erste Einrichtung 10 zur Erzeugung von Löchern 3a und 4 mit einer ersten Querschnittsfläche und eine zweite Einrichtung 11 zur Erzeugung von Löchern 3b mit einer zweiten Querschnittsfläche auf.

Die erste Einrichtung 10 ist unterteilt in zwei Stationen 10a und 10b und die zweite Einrichtung 11 ist unterteilt in zwei Stationen 11a und 11b.

Die Station 10a umfasst ein Bohrerfeld 7 mit 8 Reihen und 30 Spalten von Bohrern 7a eines ersten Durchmessers. Die zweite Station 10b umfasst ein Bohrerfeld 7' desselben Typs wie das Bohrerfeld 7, ist jedoch gegenüber dem Bohrerfeld 7 seitlich versetzt. Auf diese Weise können in zwei aufeinanderfolgenden Bohrhüben in der ersten Einrichtung versetzt zueinander angeordnete Löcher desselben Durchmessers hergestellt werden.

Die zweite Einrichtung 11 ist grundsätzlich nach demselben Prinzip wie die erste Einrichtung 10 aufgebaut. Auch hier sind zwei Bohrerfelder 8 und 8' desselben Typs vorgesehen, wobei hier jedoch die Bohrer 8a und 8b einen größeren Durchmesser haben als die Bohrer 7a und 7b der ersten Einrichtung 10. Auch sind bei den Bohrerfeldern 8 und 8' nur 4 Reihen mit 15 Spalten an Bohrern 8a bzw. 8b vorgesehen.

Bei der Vorrichtung gemäß Fig. 7 kann eine Platte in einer Produktionsbewegungsrichtung, die hier durch einen Pfeil dargestellt ist, die einzelnen Stationen durchlaufen, wobei die Platte über eine Transporteinrichtung zwischen den Stationen bewegt wird. Zwischen der ersten Einrichtung 10 und der zweiten Einrichtung 11 erfolgt außerdem ein Wenden der Platte.

## Patentansprüche

1. Fußbodenpaneel (1) mit schallabsorbierenden Eigenschaften, enthaltend eine eine Oberseite (2a) und eine Unterseite (2b) aufweisende Holzwerkstoffplatte als Trägerplatte (2),
- wobei das Fußbodenpaneel (1) mit einem Nutprofil (9a) und einem Federprofil (9b) versehen ist,wobei das Fußbodenpaneel (1) eine Vielzahl von Ausnehmungen (3) aufweist, die sich von seiner Oberseite (1a) ausgehend in Richtung seiner Unterseite (1b) erstrecken und die Trägerplatte (2) vollständig durchdringen,
- wobei jede Ausnehmung (3) unterteilt ist in mindestens einen oberen Abschnitt (3a) und in genau einen unteren Abschnitt (3b),
- wobei sich bei jeder Ausnehmung (3) jeder obere Abschnitt (3a) von der Oberseite (1a) des Fußbodenpaneels (1) bis zum unteren Abschnitt (3b) und der untere Abschnitt (3b) von jedem oberen Abschnitt (3a) bis zur Unterseite (2b) der Trägerplatte (2) erstreckt,
- wobei bei jeder Ausnehmung (3) die Querschnittsfläche jedes oberen Abschnitts (3a) kleiner als die Querschnittsfläche des unteren Abschnitts (3b) ist,
**dadurch gekennzeichnet,**
- **dass** die maximale Breite jedes oberen Abschnitts (3a) aller Ausnehmungen (3) höchstens 1,2 mm beträgt und
- **dass** bei jeder Ausnehmung (3) sich jeder obere Abschnitt (3a) von der Oberseite (1a) des Fußbodenpaneels (1) bis in die Trägerplatte (2) erstreckt.

2. Fußbodenpaneel (1) nach Anspruch 1, **dadurch gekennzeichnet, dass** bei jeder Ausnehmung (3) die Querschnittsform jedes oberen Abschnitts (3a) und/oder das den jeweiligen oberen Abschnitt (3a) bildende Material des Fußbodenpaneels (1) derart gebildet ist, dass eine Flüssigkeit mit einer Oberflächenspannung von mindestens 50x10⁻³N/m, bevorzugt von mindestens 40x10⁻³N/m, besonders bevorzugt von mindestens 30x10⁻³N/m, bei einer Temperatur von 20°C, nicht in den oberen Abschnitt eindringen kann.

3. Fußbodenpaneel (1) nach Anspruch 1 oder 2, **dadurch gekennzeichnet, dass** das Fußbodenpaneel (1) eine Vielzahl von Sacklöchern (4) aufweist, die sich von seiner Oberseite (1a) ausgehend in Richtung seiner Unterseite (1b) erstrecken, wobei insbesondere bei jedem Sackloch (4) die Querschnittsform und/oder das das Sackloch (4) bildende Material des Fußbodenpaneels (1) derart gebildet ist, dass eine Flüssigkeit mit einer Oberflächenspannung von mindestens 50x10⁻³N/m, bevorzugt von mindestens 40x10⁻³N/m, besonders bevorzugt von mindestens 30x10⁻³N/m, bei einer Temperatur von 20°C, nicht in den oberen Abschnitt eindringen kann.

4. Fußbodenpaneel (1) nach einem der Ansprüche 1 bis 3, **dadurch gekennzeichnet, dass** der Querschnitt zumindest eines oberen Abschnitts (3a) und/oder des unteren Abschnitts (3b) zumindest einer Ausnehmung (3), bevorzugt aller Ausnehmungen (3), und/oder der Querschnitt zumindest eines Sacklochs (4), bevorzugt aller Sacklöcher (4), eine Kreisform, eine elliptische Form, eine mehreckige Form oder eine Freiform hat.

5. Fußbodenpaneel (1) nach einem der Ansprüche 1 bis 4, **dadurch gekennzeichnet, dass** die maximale Breite, insbesondere der Durchmesser, jedes oberen Abschnitts (3a) aller Ausnehmungen (3) und/oder die maximale Breite, insbesondere der Durchmesser, aller Sacklöcher (4) höchstens 0,8 mm, bevorzugt höchstens 0,6 mm, beträgt.

6. Fußbodenpaneel (1) nach einem der Ansprüche 1 bis 5, **dadurch gekennzeichnet, dass** die Querschnittsfläche jedes oberen Abschnitts (3a) aller Ausnehmungen (3) und/oder die Querschnittsfläche aller Sacklöcher (4) höchstens 1,15 mm², bevorzugt höchstens 0,55 mm², besonders bevorzugt höchstens 0,30 mm², beträgt.

7. Fußbodenpaneel (1) nach einem der Ansprüche 1 bis 6, **dadurch gekennzeichnet, dass** die Querschnittsfläche des unteren Abschnitts (3b) zumindest einer Ausnehmung (3), bevorzugt aller Ausnehmungen (3), mindestens 10-fach, bevorzugt mindestens 40-fach, besonders bevorzugt mindestens 100-fach, größer als die Querschnittsfläche zumindest eines oberen Abschnitts (3a) der jeweiligen Ausnehmung (3) ist.

8. Fußbodenpaneel (1) nach einem der Ansprüche 1 bis 7, **dadurch gekennzeichnet, dass** der Anteil an Löchern (3a,4), die an der Oberseite (1a) des Fußbodenpaneels (1) von den oberen Abschnitten (3a) der Ausnehmungen (3) und/oder von den Sacklöchern (4) gebildet werden, zu der gesamten oberseitigen Oberfläche des Fußbodenpaneels (1) höchstens 18%, bevorzugt höchstens 8%, besonders bevorzugt höchstens 3%, beträgt, wobei insbesondere der Abstand jedes Lochs (3a,4) zu dem jeweils am nächsten liegenden benachbarten Loch (3a,4) höchstens 10 mm, bevorzugt höchstens 5 mm, besonders bevorzugt höchstens 3 mm, beträgt.

9. Fußbodenpaneel (1) nach einem der Ansprüche 1 bis 8, **dadurch gekennzeichnet, dass** bei mindestens einer Ausnehmung (3), bevorzugt bei allen Ausnehmungen (3), mindestens zwei, bevorzugt mindestens drei, besonders bevorzugt mindestens vier, obere Abschnitte (3a) in einen gemeinsamen unteren Abschnitt (3b) münden.

10. Fußbodenpaneel (1) nach einem der Ansprüche 1 bis 9, **dadurch gekennzeichnet, dass** die Ausnehmungen (3), insbesondere die oberen Abschnitte (3a), und/oder die Sacklöcher (4) mit einer schalloffenen Masse verschlossen sind.

11. Verfahren zur Herstellung eines Fußbodenpaneels (1) mit schallabsorbierenden Eigenschaften nach einem der Ansprüche 1 bis 10, bei dem nacheinander die folgenden Schritte durchgeführt werden:
- Bereitstellen einer Platte (2,2') als Holzwerkstoffplatte oder enthaltend eine Holzwerkstoffplatte, wobei die Platte (2,2') mit einer eine Auftrittsfläche bildenden Oberseite (1a,2a) und einer eine Auflagefläche bildenden Unterseite (2b) versehen ist,
- Erzeugen von Löchern (3a,4) mit einer ersten Querschnittsfläche in der Oberseite (1a,2a) oder in der Unterseite (2b),
- Verlagern der Platte (2,2') und
- Erzeugen von Löchern (3b) mit einer zweiten Querschnittsfläche, die von der ersten Querschnittsfläche verschieden ist, in der jeweils anderen Seite (2b;1a,2a),
wobei zumindest ein Teil (3a) der Löcher (3a,4) mit der kleineren Querschnittsfläche in die Löcher (3b) mit der größeren Querschnittsfläche mündet, wobei jedes der Löcher (3a) mit der kleineren Querschnittsfläche, das in die Löcher (3b) mit der größeren Querschnittsfläche mündet, bis in den Holzwerkstoff reicht und eine maximale Breite von höchstens 1,2 mm hat.

12. Verfahren nach Anspruch 11, **dadurch gekennzeichnet, dass** die Löcher (3a,3b,4) mit der ersten Querschnittsfläche und/oder der zweiten Querschnittsfläche durch eine spanende Bearbeitung, bevorzugt durch Bohren, erzeugt werden, wobei insbesondere zum Erzeugen der Löcher (3a,4) mit der ersten Querschnittsfläche ein erster Bohrvorgang durchgeführt wird, umfassend mindestens einen ersten Bohrhub, bei dem ein Bohrerfeld (7,7') mit einer Vielzahl von Bohrern (7a,7b) relativ zu der, vorzugsweise auf einem Tisch aufliegenden, Platte (2,2') bewegt wird, während zumindest ein Teil der Bohrer (7a,7b) eines ersten Durchmessers rotiert, wobei das Bohrerfeld (7,7') so weit in Richtung der Platte (2,2') bewegt wird, dass die rotierenden Bohrer (7a,7b) des ersten Durchmessers die Platte (2,2') zumindest teilweise durchdringen und Löcher (3a,4) eines ersten Durchmessers erzeugen, und/oder zum Erzeugen der Löcher (3b) mit der zweiten Querschnittsfläche ein zweiter Bohrvorgang durchgeführt wird, umfassend mindestens einen zweiten Bohrhub, bei dem ein Bohrerfeld (8,8') mit einer Vielzahl von Bohrern (8a,8b) relativ zu der, vorzugsweise auf einem oder dem Tisch aufliegenden, Platte (2,2') bewegt wird, während zumindest ein Teil der Bohrer (8a,8b) eines zweiten Durchmessers rotiert, wobei das Bohrerfeld (8,8') so weit in Richtung der Platte (2,2') bewegt wird, dass die rotierenden Bohrer (8a,8b) des zweiten Durchmessers die Platte (2,2') zumindest teilweise durchdringen und Löcher (3b) eines zweiten Durchmessers erzeugen.

13. Verfahren nach Anspruch 11 oder 12, **dadurch gekennzeichnet, dass** ein Teil, bevorzugt die Hälfte, der Löcher (3a,4) mit der kleineren Querschnittsfläche als Sacklöcher (4) hergestellt wird.

14. Verfahren nach einem der Ansprüche 11 bis 13, **dadurch gekennzeichnet, dass** die Ausnehmungen (3), insbesondere die oberen Abschnitte (3a), und/oder die Sacklöcher (4) mit einer schalloffenen Masse verschlossen werden.

15. Vorrichtung zur Durchführung eines Verfahrens zur Herstellung eines Fußbodenpaneels (1) mit schallabsorbierenden Eigenschaften zur Durchführung eines Verfahrens nach einem der Ansprüche 11 bis 14,
- mit einer ersten Einrichtung (10) zur Erzeugung von Löchern (3a,4) mit einer ersten Querschnittsfläche in einer Platte (2,2'), die eine Holzwerkstoffplatte aufweist oder ist, und
- mit einer zweiten Einrichtung (11) zur Erzeugung von Löchern (3b) mit einer zweiten Querschnittsfläche, die von der ersten Querschnittsfläche verschieden ist, in einer Platte (2,2'), die eine Holzwerkstoffplatte aufweist oder ist,
wobei die Einrichtungen (10,11) so ausgebildet sind, dass bei den erzeugten Löchern (3a,3b,4) zumindest ein Teil der Löcher (3a,4) der kleineren Querschnittsfläche in die Löcher (3b) der größeren Querschnittsfläche mündet, wobei jedes der Löcher (3a) mit der kleineren Querschnittsfläche, das in die Löcher (3b) mit der größeren Querschnittsfläche mündet, bis in den Holzwerkstoff reicht und eine maximale Breite von höchstens 1,2 mm hat.

16. Verwendung eines Verfahrens nach einem der Ansprüche 11 bis 14 oder einer Vorrichtung nach Anspruch 15 zur Herstellung eines Fußbodenpaneels (1) mit schallabsorbierenden Eigenschaften.

17. Verwendung eines Fußbodenpaneels (1) mit schallabsorbierenden Eigenschaften nach einem der Ansprüche 1 bis 10 zur Herstellung eines Fußbodens mit schallabsorbierenden Eigenschaften.

## Claims

1. A floor panel (1) having sound-absorbing properties, containing a wood-based material board, which has a top side (2a) and an underside (2b), as a carrier board (2),
- the floor panel (1) being provided with a groove profile (9a) and a tongue profile (9b), the floor panel (1) having a multiplicity of recesses (3), which, starting from the top side (1a) of said panel, extend in the direction of the underside (1b) of said panel, and pass completely through the carrier board (2),
- each recess (3) being divided into at least one upper section (3a) and into exactly one lower section (3b),
- in each recess (3), each upper section (3a) extending from the top side (1a) of the floor panel (1) to the lower section (3b) and the lower section (3b) extending from each upper section (3a) to the underside (2b) of the carrier board (2),
- in each recess (3), the cross-sectional area of each upper section (3a) being smaller than the cross-sectional area of the lower section (3b),
**characterised in that**
- the maximum width of each upper section (3a) of all the recesses (3) is no more than 1,2 mm, and,
- in each recess (3), each upper section (3a) extends from the top side (1a) of the floor panel (1) into the carrier board (2).

2. The floor panel (1) according to Claim 1, **characterised in that** in each recess (3), the cross-sectional shape of each upper section (3a) and/or the material of the floor panel (1) that forms the respective upper section (3a) is formed such that a liquid having a surface tension of at least 50 x 10⁻³ N/m, preferably of at least 40 x 10⁻³ N/m, particularly preferably of at least 30 x 10⁻³ N/m, at a temperature of 20°C, cannot penetrate into the upper section.

3. The floor panel (1) according to Claim 1 or 2, **characterised in that** the floor panel (1) has a multiplicity of blind holes (4), which, starting from the top side (1a) of said panel, extend in the direction of the underside (1b) of said panel, wherein in particular in each blind hole (4), the cross-sectional shape and/or the material of the floor panel (1) that forms the blind hole (4) is formed such that a liquid having a surface tension of at least 50 x 10⁻³ N/m, preferably of at least 40 x 10⁻³ N/m, particularly preferably of at least 30 x 10⁻³ N/m, at a temperature of 20°C, cannot penetrate into the upper section.

4. The floor panel (1) according to any one of Claims 1 to 3, **characterised in that** the cross section of at least one upper section (3a) and/or of the lower section (3b) of at least one recess (3), preferably all the recesses (3), and/or the cross section of at least one blind hole (4), preferably all the blind holes (4), has a circular shape, an elliptical shape, a polygonal shape or a free shape.

5. The floor panel (1) according to any one of Claims 1 to 4, **characterised in that** the maximum width, in particular the diameter, of each upper section (3a) of all the recesses (3) and/or the maximum width, in particular the diameter, of all the blind holes (4) is no more than 0,8 mm, preferably no more than 0,6 mm.

6. The floor panel (1) according to any one of Claims 1 to 5, **characterised in that** the cross-sectional area of each upper section (3a) of all the recesses (3) and/or the cross-sectional area of all the blind holes (4) is no more than 1,15 mm², preferably no more than 0,55 mm², particularly preferably no more than 0,30 mm².

7. The floor panel (1) according to any one of Claims 1 to 6, **characterised in that** the cross-sectional area of the lower section (3b) of at least one recess (3), preferably all the recesses (3), is at least 10 times, preferably at least 40 times, particularly preferably at least 100 times, greater than the cross-sectional area of at least one upper section (3a) of the respective recess (3).

8. The floor panel (1) according to any one of Claims 1 to 7, **characterised in that** the ratio of holes (3a, 4) that are formed at the top side (1a) of the floor panel (1) by the upper sections (3a) of the recesses (3) and/or by the blind holes (4) to the total topside surface area of the floor panel (1) is no more than 18%, preferably no more than 8%, particularly preferably no more than 3%, wherein in particular the distance of each hole (3a, 4) from the respectively nearest adjacent hole (3a, 4) is no more than 10 mm, preferably no more than 5 mm, particularly preferably no more than 3 mm.

9. The floor panel (1) according to any one of Claims 1 to 8, **characterised in that** in at least one recess (3), preferably all the recesses (3), at least two, preferably at least three, particularly preferably at least four, upper sections (3a) open into a common lower section (3b).

10. The floor panel (1) according to any one of Claims 1 to 9, **characterised in that** the recesses (3), in particular the upper sections (3a), and/or the blind holes (4) are closed with a mass open to sound.

11. A method for producing a floor panel (1) having sound-absorbing properties according to any one of Claims 1 to 10, in which the following steps are carried out consecutively:
- providing a board (2, 2') in the form of a wood-based material board or containing a wood-based material board, wherein the board (2, 2') is provided with a top side (1a, 2a) that forms a walking surface and an underside (2b) that forms a contact surface,
- creating holes (3a, 4) having a first cross-sectional area in the top side (1a, 2a) or in the underside (2b),
- displacing the board (2, 2') and
- creating holes (3b) having a second cross-sectional area that is different from the first cross-sectional area, in the respectively other side (2b; 1a, 2a),
wherein at least some (3a) of the holes (3a, 4) having the smaller cross-sectional area open into the holes (3b) having the greater cross-sectional area, wherein each of the holes (3a) having the smaller cross-sectional area that opens into the holes (3b) having the greater cross-sectional area extends into the wood-based material and has a maximum width of no more than 1,2 mm.

12. The method according to Claim 11, **characterised in that** the holes (3a, 3b, 4) having the first cross-sectional area and/or the second cross-sectional area are created by machine cutting, preferably by drilling, wherein in particular a first drilling process is carried out to create the holes (3a, 4) having the first cross-sectional area, said first drilling process comprising at least one first drilling stroke, in which a drill field (7, 7') with a multiplicity of drills (7a, 7b) is moved relative to the board (2, 2'), which is preferably lying on a table, while at least some of the drills (7a, 7b) of a first diameter rotate, wherein the drill field (7, 7') is moved in the direction of the board (2, 2') so far that the rotating drills (7a, 7b) of the first diameter at least partially penetrate the board (2, 2') and create holes (3a, 4) of a first diameter, and/or a second drilling process is carried out to create the holes (3b) having the second cross-sectional area, said second drilling process comprising at least one second drilling stroke, in which a drill field (8, 8') having a multiplicity of drills (8a, 8b) is moved relative to the board (2, 2'), which is preferably lying on a table or on the table, while at least some of the drills (8a, 8b) of a second diameter rotate, wherein the drill field (8, 8') is moved in the direction of the board (2, 2') so far that the rotating drills (8a, 8b) of the second diameter at least partially penetrate the board (2, 2') and create holes (3b) of a second diameter.

13. The method according to Claim 11 or 12, **characterised in that** some, preferably half, of the holes (3a, 4) having the smaller cross-sectional area are produced as blind holes (4).

14. The method according to any one of Claims 11 to 13, **characterised in that** the recesses (3), in particular the upper sections (3a), and/or the blind holes (4) are being closed with a mass open to sound.

15. A device for carrying out a method for producing a floor panel (1) having sound-absorbing properties, for carrying out a method according to any one of Claims 11 to 14,
- having a first means (10) for creating holes (3a, 4) having a first cross-sectional area in a board (2, 2'), which contains or is a wood-based material board, and
- having a second means (11) for creating holes (3b) having a second cross-sectional area, which is different from the first cross-sectional area, in a board (2, 2'), which contains or is a wood-based material board,
wherein the means (10, 11) are configured such that, of the holes (3a, 3b, 4) created, at least some of the holes (3a, 4) having the smaller cross-sectional area open into the holes (3b) having the greater cross-sectional area, wherein each of the holes (3a) having the smaller cross-sectional area that opens into the holes (3b) having the greater cross-sectional area extends into the wood-based material and has a maximum width of no more than 1,2 mm.

16. A use of a method according to any one of Claims 11 to 14 or a device according to Claim 15 for producing a floor panel (1) having sound-absorbing properties.

17. A use of a floor panel (1) having sound-absorbing properties according to any one of Claims 1 to 10 for producing a floor having sound-absorbing properties.

## Revendications

1. Panneau de revêtement de sol (1), ayant des propriétés d'absorption phonique, comprenant un plateau de matériau dérivé du bois en tant que plateau porteur (2), présentant une face supérieure (2a) et une face inférieure (2b),
- dans lequel le panneau de revêtement de sol (1) est doté d'un profilé-rainure (9a) et d'un profilé-ressort (9b), dans lequel le panneau de revêtement de sol (1) présente une pluralité d'évidements (3) qui s'étendent en direction de sa face inférieure (1b) en partant de sa face supérieure (1a) et traversent complètement le plateau porteur (2),
- dans lequel chaque évidement (3) est divisé en au moins un tronçon supérieur (3a) et en précisément un tronçon inférieur (3b),
- dans lequel pour chaque évidement (3), chaque tronçon supérieur (3a) s'étend de la face supérieure (1a) du panneau de revêtement de sol (1) jusqu'au tronçon inférieur (3b) et le tronçon inférieur (3b) s'étend de chaque tronçon supérieur (3a) jusqu'à la face inférieure (2b) du plateau porteur (2),
- dans lequel pour chaque évidement (3), la surface transversale de chaque tronçon supérieur (3a) est inférieure à la surface transversale du tronçon inférieur (3b),
**caractérisé en ce que**
- la largeur maximale de chaque tronçon supérieur (3a) de tous les évidements (3) fait au plus 1,2 mm et
- pour chaque évidement (3), chaque tronçon supérieur (3a) s'étend de la face supérieure (1a) du panneau de revêtement de sol (1) jusque dans le plateau porteur (2).

2. Panneau de revêtement de sol (1) selon la revendication 1, **caractérisé en ce que** pour chaque évidement (3), la forme transversale de chaque tronçon supérieur (3a) et/ou le matériau du panneau de revêtement de sol (1) formant le tronçon supérieur respectif (3a) est ainsi formé qu'un liquide avec une tension de surface d'au moins 50x10⁻³N/m, de préférence d'au moins 40x10⁻³N/m, particulièrement de préférence d'au moins 30x10⁻³N/m, pour une température de 20°C, ne puisse pas pénétrer dans le tronçon supérieur.

3. Panneau de revêtement de sol (1) selon la revendication 1 ou 2, **caractérisé en ce que** le panneau de revêtement de sol (1) présente une pluralité de trous borgnes (4) qui s'étendent en direction de sa face inférieure (1b) en partant de sa face supérieure (1a), sachant qu'en particulier pour chaque trou borgne (4), la forme transversale et/ou le matériau du panneau de revêtement de sol (1) formant le trou borgne (4) est ainsi formé qu'un liquide avec une tension de surface d'au moins 50x10⁻³N/m, de préférence d'au moins 40x10⁻³N/m, particulièrement de préférence d'au moins 30x10⁻³N/m, pour une température de 20°C, ne puisse pas pénétrer dans le tronçon supérieur.

4. Panneau de revêtement de sol (1) selon l'une des revendications 1 à 3, **caractérisé en ce que** la section transversale d'au moins un tronçon supérieur (3a) et/ou du tronçon inférieur (3b) d'au moins un évidement (3), de préférence de tous les évidements (3), et/ou la section transversale d'au moins un trou borgne (4), de préférence de tous les trous borgnes (4), a une forme circulaire, une forme elliptique, une forme polygonale ou une forme libre.

5. Panneau de revêtement de sol (1) selon l'une des revendications 1 à 4, **caractérisé en ce que** la largeur maximale, en particulier le diamètre, de chaque tronçon supérieur (3a) de tous les évidements (3) et/ou la largeur maximale, en particulier le diamètre, de tous les trous borgnes (4), fait au plus 0,8 mm, de préférence au plus 0,6 mm.

6. Panneau de revêtement de sol (1) selon l'une des revendications 1 à 5, **caractérisé en ce que** la surface transversale de chaque tronçon supérieur (3a) de tous les évidements (3) et/ou la surface transversale de tous les trous borgnes (4), fait au plus 1,15 mm², de préférence au plus 0,55 mm², particulièrement de préférence au plus 0,30 mm².

7. Panneau de revêtement de sol (1) selon l'une des revendications 1 à 6, **caractérisé en ce que** la surface transversale du tronçon inférieur (3b) d'au moins un évidement (3), de préférence de tous les évidements (3), est plus grande d'au moins 10 fois, de préférence d'au moins 40 fois, particulièrement de préférence d'au moins 100 fois, que la surface transversale d'au moins un tronçon supérieur (3a) de l'évidement respectif (3).

8. Panneau de revêtement de sol (1) selon l'une des revendications 1 à 7, **caractérisé en ce que** la part de trous (3a, 4) qui sont formés par les tronçons supérieurs (3a) des évidements (3) sur la face supérieure (1a) du panneau de revêtement de sol (1) et/ou par les trous borgnes (4), fait au plus 18 %, de préférence au plus 8 %, particulièrement de préférence au plus 3 %, de la surface totale côté supérieur du panneau de revêtement de sol (1), dans lequel en particulier l'écart de chaque trou (3a, 4) par rapport au trou voisin (3a, 4) respectif le plus proche fait au plus 10 mm, de préférence au plus 5 mm, particulièrement de préférence au plus 3 mm.

9. Panneau de revêtement de sol (1) selon l'une des revendications 1 à 8, **caractérisé en ce que** pour au moins un évidement (3), de préférence pour tous les évidements (3), au moins deux, de préférence au moins trois, particulièrement de préférence au moins quatre, tronçons supérieurs (3a) débouchent dans un tronçon inférieur (3b) commun.

10. Panneau de revêtement de sol (1) selon l'une des revendications 1 à 9, **caractérisé en ce que** les évidements (3), en particulier les tronçons supérieurs (3a), et/ou les trous borgnes (4) sont fermés avec une masse ouverte aux sons.

11. Procédé destiné à la fabrication d'un panneau de revêtement de sol (1) ayant des propriétés d'absorption phonique selon l'une des revendications 1 à 10, dans lequel les étapes suivantes sont exécutées l'une après l'autre :
- préparation d'un plateau (2, 2') en tant que plateau de matériau dérivé du bois ou contenant un plateau de matériau dérivé du bois, dans lequel le plateau (2, 2') est doté d'une face supérieure (1a, 2a) formant une surface de marche et d'une face inférieure (2b) formant une surface d'appui,
- production de trous (3a, 4) avec une première surface transversale dans la face supérieure (1a, 2a) ou dans la face inférieure (2b),
- déplacement du plateau (2, 2') et
- production de trous (3b) avec une seconde surface transversale qui est différente de la première surface transversale, dans l'autre côté respectif (2b ; 1a, 2a),
dans lequel au moins une partie (3a) des trous (3a, 4) avec la surface transversale plus petite débouche dans les trous (3b) avec la surface transversale plus grande, dans lequel chacun des trous (3a) avec la surface transversale plus petite qui débouche dans les trous (3b) avec la surface transversale plus grande, va jusque dans le matériau dérivé du bois et a une largeur maximale d'au plus 1,2 mm.

12. Procédé selon 1a revendication 11, **caractérisé en ce que** les trous (3a, 3b, 4) avec la première surface transversale et/ou la seconde surface transversale sont produits par un usinage par enlèvement de copeaux, de préférence par perçage, dans lequel en particulier pour produire les trous (3a, 4) avec la première surface transversale, une première opération de perçage est exécutée, comprenant au moins une première course de perçage, dans lequel un champ de perceuses (7, 7') avec une pluralité de perceuses (7a, 7b) est déplacé par rapport au plateau (2, 2') reposant de préférence sur une table, pendant qu'au moins une partie des perceuses (7a, 7b) d'un premier diamètre tourne, dans lequel le champ de perceuses (7, 7') est déplacé si loin en direction du plateau (2, 2') que les perceuses (7a, 7b) du premier diamètre en rotation traversent au moins partiellement le plateau (2, 2') et produisent des trous (3a, 4) d'un premier diamètre, et/ou pour produire les trous (3b) avec la seconde surface transversale, une seconde opération de perçage est exécutée, comprenant au moins une seconde course de perçage, dans lequel un champ de perceuses (8, 8') avec une pluralité de perceuses (8a, 8b) est déplacé par rapport au plateau (2, 2') reposant de préférence sur une table, pendant qu'au moins une partie des perceuses (8a, 8b) d'un second diamètre tourne, dans lequel le champ de perceuses (8, 8') est déplacé si loin en direction du plateau (2, 2') que les perceuses (8a, 8b) du second diamètre en rotation traversent au moins partiellement le plateau (2, 2') et produisent des trous (3b) d'un second diamètre.

13. Procédé selon la revendication 11 ou 12, **caractérisé en ce qu'**une partie, de préférence la moitié, des trous (3a, 4) avec la surface transversale plus petite sont fabriqués en tant que trous borgnes (4).

14. Procédé selon l'une des revendications 11 à 13, **caractérisé en ce que** les évidements (3), en particulier les tronçons supérieurs (3a), et/ou les trous borgnes (4) sont fermés avec une masse ouverte aux sons.

15. Dispositif destiné à l'exécution d'un procédé pour la fabrication d'un panneau de revêtement de sol (1) ayant des propriétés d'absorption phonique pour exécuter un procédé selon l'une des revendications 11 à 14,
- comprenant un premier dispositif (10) pour produire des trous (3a, 4) avec une première surface transversale dans un plateau (2, 2') qui présente ou est un plateau de matériau dérivé du bois, et
- comprenant un second dispositif (11) pour produire des trous (3b) avec une seconde surface transversale, qui est différente de la première surface transversale, dans un plateau (2, 2') qui présente ou est un plateau de matériau dérivé du bois,
dans lequel les dispositifs (10, 11) sont ainsi conçus que pour les trous produits (3a, 3b, 4), au moins une partie des trous (3a, 4) de la surface transversale plus petite débouche dans les trous (3b) de la surface transversale plus grande, dans lequel chacun des trous (3a) avec la surface transversale plus petite qui débouche dans les trous (3b) avec la surface transversale plus grande, va jusque dans le matériau dérivé du mois et a une largeur maximale d'au plus 1,2 mm.

16. Emploi d'un procédé selon l'une des revendications 11 à 14 ou d'un dispositif selon la revendication 15 pour fabriquer un panneau de revêtement de sol (1) aux propriétés d'absorption phoniques.

17. Emploi d'un panneau de revêtement de sol (1) aux propriétés d'absorption phoniques selon l'une des revendications 1 à 10 pour fabriquer un revêtement de sol aux propriétés d'absorption phoniques.
